# FASCICULE DE BREVET EUROPEEN

(11) **EP 4 225 527 B1**
(45) Date de publication et mention de la délivrance du brevet: **11.09.2024**
(21) Numéro de dépôt: 21798422.8
(22) Date de dépôt: 30.09.2021
(51) Int. Cl.: B23K 20/18, B23P 15/04, B21D 53/78, B23K 20/02, F01D 5/14, F04D 29/02, F04D 29/32

(54) **PROCÉDÉ DE FABRICATION D'UNE AUBE DE COMPRESSEUR DE TURBOMACHINE PAR COMPACTAGE**
VERFAHREN ZUR HERSTELLUNG EINER VERDICHTERSCHAUFEL EINER TURBOMASCHINE DURCH KOMPAKTIERUNG
METHOD FOR MANUFACTURING A TURBOMACHINE COMPRESSOR BLADE BY COMPACTING

(30) Priorité: 06.10.2020 FR 2010179
(43) Date de publication de la demande: 16.08.2023
(73) Titulaire: SAFRAN AIRCRAFT ENGINES, 75015 Paris (FR)
(72) Inventeur: SALMON, Jérôme, 77550 MOISSY-CRAMAYEL (FR); GIMEL, Alexandre, 77550 MOISSY-CRAMAYEL (FR); GLEIZE, Christophe, 77550 MOISSY-CRAMAYEL (FR); PEREIRA, Axel, 77550 MOISSY-CRAMAYEL (FR); RICHARD, Jean-François, 77550 MOISSY-CRAMAYEL (FR)
(74) Mandataire: Regimbeau
(86) Numéro de dépôt international: PCT/FR2021/051695
(87) Numéro de publication internationale: WO 2022/074314

(56) Documents cités:
- WO-A1-2009/039282
- WO-A1-2011/114073
- WO-A1-2020/128242
- US-A1- 2010 247 949

## Description

### DOMAINE DE L'INVENTION

L'invention concerne la fabrication des aubes de turbomachine par compactage, notamment la fabrication des aubes de compresseur de turbomachine.

### ETAT DE LA TECHNIQUE

On connaît la technique de fabrication dite de "bord d'attaque conformé sur noyau". Elle est par exemple connue du document WO-2011 /114073. Il s'agit de fabriquer une aube de compresseur de turbomachine, par exemple de turboréacteur d'avion. Il est classique qu'une telle aube comprend une face d'extrados, une face d'intrados, un bord d'attaque et un bord de fuite.

Dans le procédé, on empile une tôle d'extrados, un noyau et une tôle d'intrados. Le noyau est ainsi interposé entre les deux tôles et va servir à définir un volume interne de l'aube au niveau de son bord d'attaque. On effectue ensuite un compactage isostatique à chaud (CIC) de l'empilement. Au cours de cette opération, les deux tôles épousent étroitement la forme du noyau afin que ce dernier leur donne leur forme définitive. Il s'agit ensuite d'ôter le noyau de l'empilement, le noyau se trouvant maintenant encapsulé entre les deux tôles. Cette opération est dite de « dénoyautage ». Le noyau sera ensuite réutilisé pour la fabrication d'une nouvelle aube.

Préalablement à l'opération de compactage, on insère des pions dans des alésages pratiqués dans le noyau. Les pions ont été choisis et mis en place comme suit.

L'un des pions est en alliage à base de titane. Nous l'appelons "pion titane" dans la suite. Il permet de créer un point d'affinité entre le noyau et le titane et permet l'homogénéité du retrait. Il est soudé aux tôles d'intrados et d'extrados par soudure diffusion. Il est dimensionné pour être en surlongueur pour laisser une empreinte visuelle après compactage. Lors du CIC, sous l'effet de la pression, ce pion se déforme et se retrouve serti dans le noyau.

Les quatre autres pions sont réalisés dans un matériau différent du précédent, par exemple à base de nickel. Ils sont grossièrement alignés parallèlement à un bord longitudinal de l'empilement. Ils permettent d'obstruer les alésages correspondants du noyau qui servent ensuite pour le bridage de l'empilement lors de l'usinage faisant suite au compactage. Ils sont eux aussi dimensionnés pour laisser une empreinte visuelle après compactage de l'enveloppe en titane autour du noyau. Ces pions résistent à la pression lors du CIC et ne se déforment pas. L'alésage recevant le pion titane se trouve à distance de la ligne définie par ces quatre pions. Cette ligne s'étend entre le pion titane et le bord longitudinal.

Après le compactage et préalablement au retrait du noyau, il faut donc éliminer les pions. L'opération de dénoyautage se décompose ainsi en deux phases. La première, dite de dépiontage, consiste à libérer les alésages situés sur le noyau. En effet, ces alésages vont permettre par la suite de créer un référentiel et des zones de bridage de l'ensemble. La deuxième constitue le dénoyautage proprement dit, qui permet de séparer l'enveloppe et le noyau.

Pour retirer les quatre pions précités, on effectue une première opération d'usinage, qui consiste à dégager le titane face aux pions pour libérer leur sortie, puis à les chasser pour les extraire du noyau. Pour cela, une première opération de posage (une installation précise de l'ensemble sur un support) de l'empilement est effectuée.

La difficulté réside ensuite dans le retrait du pion titane. Sachant qu'il est serti dans le noyau, la seule possibilité est une élimination du pion par usinage. Mais cette opération ne doit en aucun cas porter atteinte à l'intégrité du noyau. Il faut donc pour cela localiser le pion avec précision. Et percer le pion titane sans risquer d'impacter le noyau exige une perpendicularité entre la face principale de l'empilement et l'axe de cet alésage.

Il faut donc à cette fin réaliser un nouveau posage qui doit être particulièrement rigoureux. Ce second posage est réalisé en immobilisant l'empilement sur un support au moyen des quatre alésages maintenant libérés. Or ces derniers sont sensiblement alignés entre eux et de surcroit très éloignés du centre de gravité du noyau. Il est donc difficile de fixer l'empilement avec précision et robustesse sur son support. De plus, ces quatre pions étant sensiblement alignés, ils ne permettent pas un dégauchissage robuste et précis de l'empilement par rapport à la face principale du noyau qui sert de face de référence pendant l'élimination du pion titane.

On voit donc que ce procédé engendre deux inconvénients techniques :
- il requiert deux posages fastidieux pour effectuer le dépiontage par usinage, et
- il n'élimine pas les risques d'impacter le noyau lors de l'usinage du pion titane et donc de devoir rebuter le noyau.

Le document WO 2009/039282 décrit un procédé conforme au préambule de la revendication 1 et un empilement conforme au préambule de la revendication 10.

### EXPOSE DE L'INVENTION

A cet effet, on prévoit un procédé de fabrication d'une aube de turbomachine selon la revendication 1.

Ce procédé est notamment utile pour définir un volume interne de l'aube au niveau de son bord d'attaque.

La définition d'un polygone par les alésages primaires permet à ceux-ci de définir un référentiel beaucoup plus précis et stable sur la face du noyau permettant la fixation de l'empilement sur le support une fois ces alésages libérés de leurs pions. L'invention procure donc une augmentation de la surface du plan d'appui destiné à rendre plus robuste l'immobilisation du noyau sur l'outillage. Ce référentiel permet en outre un dégauchissement de la face sur laquelle on prend appui pour l'usinage du pion titane. Cette solution procure donc une robustesse dimensionnelle qui n'était pas atteignable auparavant.

De plus, une seule opération de posage est maintenant suffisante, afin de retirer les pions primaires. Le retrait du pion titane peut avoir lieu ensuite, une fois la pièce montée sur l'outillage prévu pour l'extraction du noyau. En permettant de passer de deux posages à un seul, l'invention permet aussi de réduire les temps de cycle.

L'invention ne nécessite pas de modification majeure des éléments (noyau, support et outillage) utilisés dans le procédé de l'art antérieur. Ils sont conservés et adaptés de façon simple et rapide à cette nouvelle solution.

On entend par « alliage à base de titane » un alliage dans lequel le titane forme au moins 50 % en poids de l'alliage.

Dans un mode de réalisation, au moins l'un des pions primaires et secondaire comprend une tige présentant un axe longitudinal et une tête s'étendant en saillie de la tige suivant une direction radiale à l'axe.

Ainsi le pion présente une collerette et peut être qualifié de "pion épaulé" Dès lors, il a pour fonction lors de l'usinage non seulement de libérer la zone de l'alésage mais aussi une surface circulaire en périphérie de ce dernier. On libère ainsi une partie de la face d'appui du noyau, qui est la surface de référence pour l'opération de dénoyautage. L'assemblage est donc plaqué sur le noyau et pas sur les tôles. Cette libération de surfaces circulaires planes coaxiales aux alésages permet de définir un référentiel encore plus précis et plus stable sur la face du noyau permettant la fixation de l'empilement sur le support une fois ces alésages libérés de leurs pions. Autrement dit, grâce à la géométrie du pion épaulé, on libère le trou et une surface circulaire en périphérie du trou. Cette zone libérée permet de retrouver la face d'appui du noyau, qui est la face de référence pour l'opération de dénoyautage. Avec un pion dépourvu de tête, l'assemblage n'est pas plaqué sur le noyau mais sur l'enveloppe en titane qui, elle, est moins précise.

Avantageusement, le procédé comprend, après l'étage de compacter l'empilement, les étapes suivantes dans l'ordre suivant :
- immobiliser l'empilement par rapport à un support,
- effectuer l'étape primaires pendant que l'empilement est immobilisé sur le support,
- immobiliser l'empilement sur un outillage au moyen d'organes de fixation traversant les alésages primaires, et
- pendant que l'empilement est immobilisé, effectuer les étapes d'éliminer le pion secondaire et d'ôter le noyau.

Dans un mode de réalisation, l'alésage secondaire s'étend à l'intérieur du polygone. On procure ainsi une stabilité particulièrement bonne de la fixation de l'empilement à l'outillage au moyen des alésages primaires au plus près du pion titane.

On peut prévoir que l'empilement comprend un bord longitudinal rectiligne, l'alésage secondaire et un premier des alésages primaires s'étendant dans un même plan perpendiculaire au bord longitudinal, l'alésage secondaire s'étendant entre le premier des alésages primaires et le bord.

On peut prévoir que l'alésage secondaire et le premier des alésages primaires sont séparés par une distance d'au moins 10 mm.

Il est préférable en effet que ces deux alésages ne soient pas trop proches l'un de l'autre afin que les deux tôles épousent bien la forme du noyau tout autour des pions en question.

On peut aussi prévoir que le procédé comprend au moins l'une des caractéristiques suivantes :
- les pions primaires sont en nombre impair,
- les pions primaires sont au moins au nombre de deux, et
- l'étape de compacter l'empilement met en oeuvre un compactage isostatique à chaud.

On peut en effet observer ici que le procédé de l'invention n'est pas limité à un tel compactage.

On prévoit également selon l'invention un empilement selon la revendication 10.

Il peut s'agir de l'empilement avant l'opération de compactage comme de l'empilement après cette opération.

Avantageusement, au moins l'un des pions primaires et secondaire comprend une tige présentant un axe longitudinal et une tête s'étendant en saillie de la tige suivant une direction radiale à l'axe.

### DESCRIPTION DES FIGURES

Nous allons maintenant présenter un mode de réalisation de l'invention à titre d'exemple non-limitatif à l'appui des dessins sur lesquels :
- la figure 1 est une vue en perspective éclatée montrant les trois couches de l'empilement dans un mode de mise en oeuvre du procédé de l'invention ;
- les figures 2 à 4 sont trois vues du noyau de l'empilement de la figure 1 ;
- la figure 5 est une vue en perspective montrant plusieurs empilements après compactage dans le cadre de ce mode de mise en oeuvre ;
- les figure 6 et 7 sont des vues montrant plusieurs étapes de ce mode de mise en oeuvre du procédé ;
- la figure 8 est une vue d'un outillage utilisé dans le cadre de cette mise en oeuvre,
- les figures 9 et 10 montrent l'empilement fixé à cet outillage, et
- la figure 11 présente des vues axiales d'un des pions avant et après sertissage.

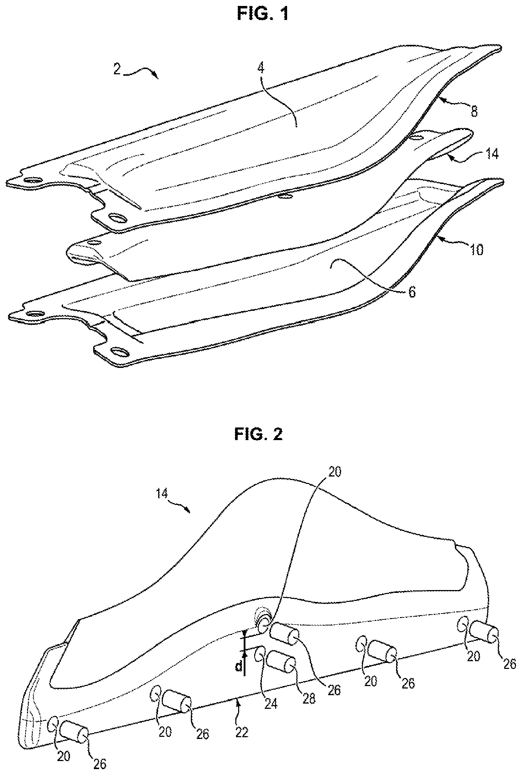

Nous allons décrire un mode de mise en oeuvre du procédé de l'invention dans lequel il s'agit de fabriquer une aube de compresseur de turbomachine, par exemple de turboréacteur d'avion. L'aube 2, représentée sous la forme de l'empilement à la figure 1, comprend une paroi ou tôle d'extrados 4, une paroi ou tôle d'intrados 6, un bord d'attaque 10 et un bord de fuite 8.

Dans une première étape, on considère seulement le noyau.

Le noyau 14 est par exemple réalisé dans le matériau commercialisé sous la marque "Waspaloy" par United Technologies Corp.

Comme illustré à la figure 2 qui montre seulement le noyau, le noyau comprend des alésages primaires 20 qui sont ici en nombre impair, au nombre de cinq dans le présent exemple. Quatre d'entre eux sont grossièrement alignés parallèlement à un bord inférieur longitudinal rectiligne 22 du noyau, à courte distance de ce bord.

Le cinquième alésage primaire 20 s'étend au centre de gravité du noyau, ou au voisinage de ce dernier, en zone médiane de l'une des faces principales du noyau. Si l'on considère la projection géométrique de chacun des alésages primaires 20 sur le bord longitudinal 22, ces alésages sont régulièrement espacés le long de ce bord. Les deux alésages situés aux extrémités de la rangée se trouvent à proximité des extrémités respectives de ce bord.

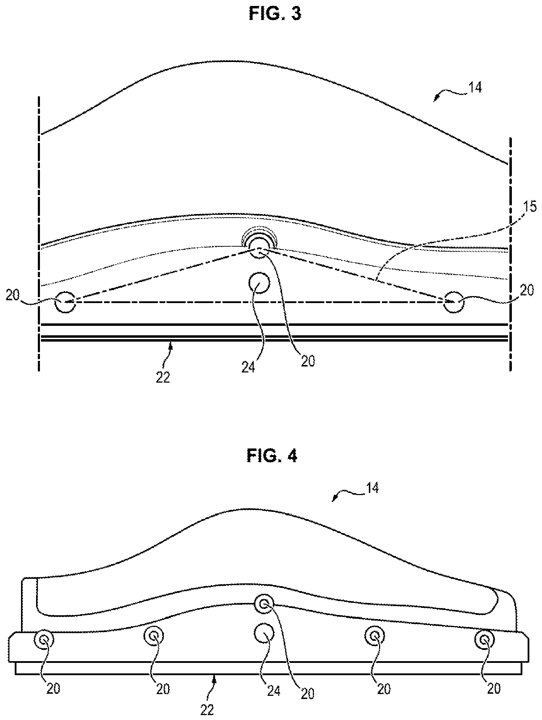

Sachant que ce cinquième alésage primaire s'étend à distance de la ligne définie par les quatre autres alésages primaires, ces cinq alésages 20 définissent entre eux plusieurs polygones formés par des triangles. On a ainsi visualisé sur la figure 3 le triangle 15 formé par les trois alésages primaires 20 situés en zone médiane du noyau.

Le noyau 14 comprend également un alésage secondaire 24 distinct des précédents. Il est situé à l'intérieur de ce triangle 15, entre d'une part la ligne définie par les quatre alésages primaires alignés et d'autre part le cinquième alésage primaire.

L'alésage secondaire 24 et ce cinquième alésage primaire 20 s'étendent dans un même plan P perpendiculaire au bord longitudinal 22, l'alésage secondaire 24 s'étendant entre le cinquième alésage primaire 20 et le bord 22. Ce plan P est visible en coupe sur la figure 4. Il est perpendiculaire au plan de la figure. L'alésage secondaire 24 et cet alésage primaire sont séparés par une distance d d'au moins 10 mm indiquée sur la figure 2.

Les alésages primaires 20 et secondaire 24 traversent chacun, le noyau 14

On installe cinq pions primaires épaulés 26 dans les alésages primaires respectifs 20. Ces pions sont réalisés dans un matériau autre qu'un alliage à base de titane. Ils sont réalisés par exemple dans un matériau à base de nickel ou dans le matériau précité commercialisé sous la marque Waspaloy ou encore dans l'un de ceux commercialisés sous la marque Inco par Spécial Metals Corporation. Ces pions 26 permettent d'obstruer les alésages correspondants 20 du noyau qui servent ensuite pour le bridage de l'empilement lors de l'usinage faisant suite au compactage. Les pions 26 sont en surlongueur, par exemple de 0,5 mm, par rapport à la longueur de l'alésage 20 du noyau pour laisser une empreinte visuelle après compactage de l'enveloppe en titane autour du noyau.

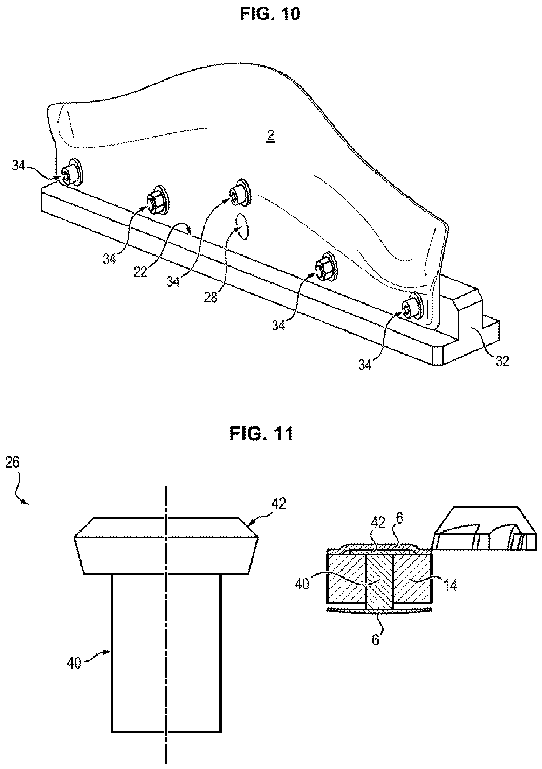

De plus, comme illustré à la figure 11, les pions primaires 26 sont épaulés afin de couvrir une surface d'appui périphérique sur le noyau, située dans l'axe des alésages 20, coté tôle extrados 4, comme illustré en partie droite de la figure 11. Plus précisément, chaque pion primaire épaulé 26 comprend une tige 40, ici cylindrique, présentant un axe longitudinal et une tête 42 s'étendant en saillie de la tige suivant une direction radiale à l'axe. La tête 42 forme ainsi une collerette.

On installe aussi un pion secondaire 28 en alliage à base de titane, par exemple l'alliage TA6V, dans l'alésage secondaire 24 de l'empilement. Ce pion est aussi épaulé. Il permet de créer un point d'affinité entre le noyau 14 et le pion et permet l'homogénéité du retrait. Il est soudé au noyau par soudure diffusion. Il est lui aussi dimensionné pour être en surlongueur, par exemple de 0,5 mm, par rapport à la longueur de l'alésage du noyau pour laisser une empreinte visuelle après compactage.

Ensuite, on empile la tôle d'extrados 4, un noyau 14 et la tôle d'intrados 6. Le noyau 14 est interposé entre les deux tôles 4 et 6 et va servir à définir un volume interne de l'aube au niveau de son bord d'attaque 8.

Les alésages sont formés dans le noyau 14 seulement, si bien que les pions sont encapsulés dans les tôles d'intrados et d'extrados. La première étape du procédé est donc l'installation des pions, la deuxième étape l'empilement des tôles et du noyau, la troisième le compactage.

En effet, ensuite, on compacte l'empilement, ici en réalisant un compactage isostatique à chaud (CIC). Au cours de cette opération, les deux tôles épousent étroitement la forme du noyau 14 afin que ce dernier leur donne leur forme définitive. Lors du CIC, sous l'effet de la pression, le pion secondaire 28 se déforme et se retrouve serti dans le noyau. Il en est de même pour les pions primaires 26.

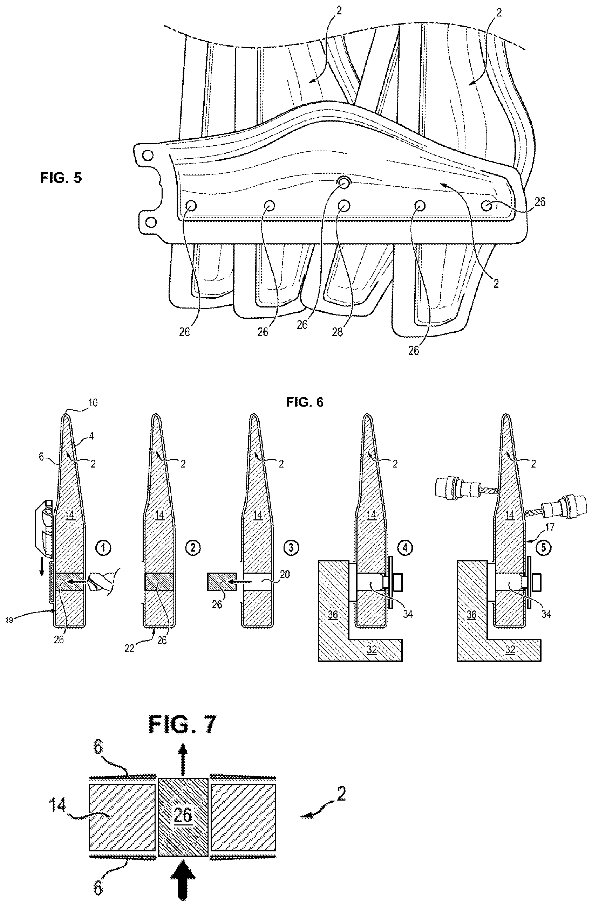

Des empilements issus du compactage ont été illustrés à la figure 5. On observe que, avant et après le compactage, on se trouve en présence d'un empilement 2 comprenant :
- une tôle d'extrados 4,
- un noyau 14,
- une tôle d'intrados 6,
- des pions primaires 26 comprenant un matériau autre qu'un alliage à base de titane logés dans des alésages primaires 20 du noyau formant un polygone 15, et
- un pion secondaire 28 en alliage à base de titane logé dans un alésage secondaire 24 du noyau.

Après le compactage et préalablement au retrait du noyau, il s'agit d'éliminer les pions, notamment du noyau, lors de l'étape de dépiontage.

Pour cela, on immobilise l'empilement 2 par rapport à un support non-illustré moyennant une opération de posage sur le support.

Puis on élimine les pions primaires 26 des alésages primaires 20. A cette fin, comme illustré aux figures 6 et 11, on effectue une première opération d'usinage du côté de l'empilement portant les têtes de pions. Lors de cette étape, on dégage le titane de la tôle face aux pions 26 pour libérer leur sortie, sur un volume compris entre la face 19 du noyau 14 contre laquelle la tête 42 est en appui et le sommet de la tête. A cette occasion, la tête est éliminée.

Ensuite, on chasse les pions 26 pour les extraire du noyau et de l'empilement, comme illustré aux figures 6 et 7.

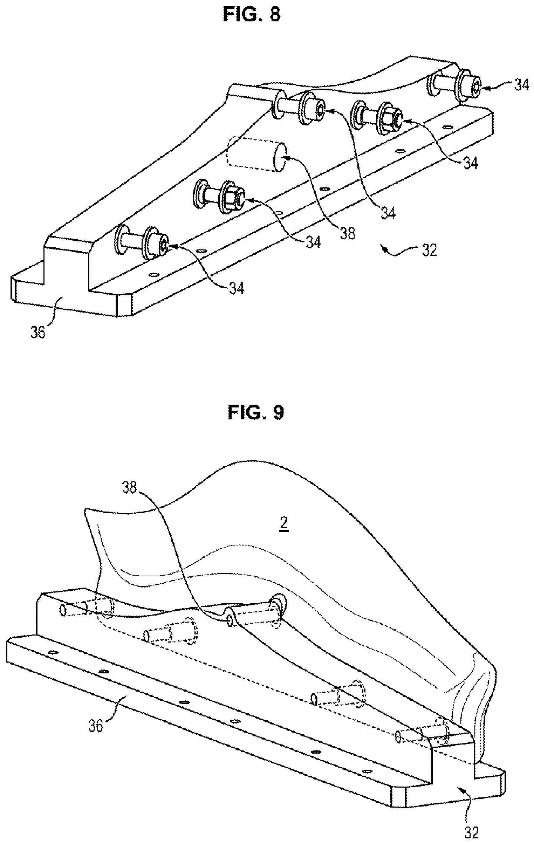

Ensuite, on libère l'empilement 2 du support et on l'immobilise cette fois sur un outillage 32 illustré notamment à la figure 8 au moyen d'organes de fixation 34 traversant les alésages primaires respectifs 20 et des alésages correspondants d'un bâti 36 de l'outillage afin de fixer rigidement l'empilement 2 au bâti 36. Les alésages primaires 20 permettent ainsi de créer un référentiel et des zones de bridage de l'empilement. Les zones de la face 19 situées initialement sous les têtes 42 servent aussi de référentiel.

Pendant que l'empilement est ainsi immobilisé, on élimine le pion secondaire 28 de l'alésage secondaire 24 par usinage. À cette fin, le bâti comprend un alésage supplémentaire 38 visible aux figures 8 à 10 et venant en coïncidence avec l'alésage secondaire 28 de l'empilement. Cet alésage supplémentaire permet d'introduire un outil d'usinage du pion secondaire à travers le bâti.

On effectue cette élimination sans difficulté et sans porter atteinte à l'intégrité du noyau puisqu'on peut localiser le pion avec précision. On est aussi en mesure de percer le pion titane sans risquer d'impacter le noyau puisque la fixation stable de l'empilement 2 au bâti 36, procurée par la disposition des alésages primaires 20 et l'appui direct sur la face du noyau, assure une perpendicularité entre la face principale 17 de l'empilement, visible à la figure 6, et l'axe de cet alésage. Cette même fixation permet un dégauchissage robuste et précis de l'empilement par rapport à la face principale 17 qui sert de face de référence pendant l'élimination du pion.

Une fois l'alésage secondaire libéré, on peut ôter le noyau 14 de l'empilement et réaliser ainsi le dénoyautage proprement dit, qui permet de séparer l'enveloppe et le noyau.

On pourrait se demander si le choix de la position du point d'affinité entre l'enveloppe titane et le noyau a un impact sur la géométrie du bord d'attaque lors du compactage. On constate que ce n'est pas le cas.

Bien que l'invention soit ici mise en oeuvre avec un pion secondaire supplémentaire par rapport à l'art antérieur, le coût de ce pion est négligeable dans le coût de production de la pièce.

Bien entendu, on pourra rapporter à l'invention de nombreuses modifications sans sortir du cadre de celle-ci. On pourra modifier le nombre d'alésages et de pions primaires ainsi que le nombre d'alésages et de pions secondaires ainsi que la disposition de tous ces éléments.

## Revendications

1. Procédé de fabrication d'une aube de turbomachine, le procédé comprenant l'étape suivante :
- installer des pions primaires (26) dans des alésages primaires (20) d'un noyau, **caractérisé en ce que** :
- les pions primaires (26) comprennent un matériau autre qu'un alliage à base de titane, et
- les alésages primaires forment au moins un polygone (15),
le procédé comprenant les étapes suivantes :
- installer un pion secondaire (28) en alliage à base de titane dans un alésage secondaire (24) du noyau,
- réaliser un empilement (2) d'une tôle d'extrados (4), du noyau (14) et d'une tôle d'intrados (6),
- compacter l'empilement,
- éliminer les pions primaires (26) des alésages primaires (20),
- éliminer le pion secondaire (28) de l'alésage secondaire (24), et
- ôter le noyau (14) de l'empilement.

2. Procédé selon la revendication précédente, dans lequel au moins l'un des pions primaires et secondaire (26, 28) comprend une tige (40) présentant un axe longitudinal et une tête (42) s'étendant en saillie de la tige suivant une direction radiale à l'axe.

3. Procédé selon l'une quelconque des revendications précédentes comprenant, après l'étage de compacter l'empilement, les étapes suivantes dans l'ordre suivant :
- immobiliser l'empilement par rapport à un support,
- effectuer l'étape d'éliminer les pions primaires (26) pendant que l'empilement est immobilisé sur le support,
- immobiliser l'empilement sur un outillage (32) au moyen d'organes de fixation (34) traversant les alésages primaires (20), et
- pendant que l'empilement est immobilisé, effectuer les étapes d'éliminer le pion secondaire (28) et d'ôter le noyau.

4. Procédé selon l'une quelconque des revendications précédentes dans lequel l'alésage secondaire (24) s'étend à l'intérieur du polygone (15).

5. Procédé selon l'une quelconque des revendications précédentes dans lequel l'empilement comprend un bord longitudinal rectiligne (22), l'alésage secondaire (24) et un premier des alésages primaires (20) s'étendant dans un même plan (P) perpendiculaire au bord longitudinal, l'alésage secondaire (24) s'étendant entre le premier des alésages primaires (20) et le bord (22).

6. Procédé selon la revendication précédente dans lequel l'alésage secondaire (24) et le premier des alésages primaires (20) sont séparés par une distance (d) d'au moins 10 mm.

7. Procédé selon l'une quelconque des revendications précédentes dans lequel les pions primaires (26) sont en nombre impair.

8. Procédé selon l'une quelconque des revendications précédentes dans lequel les pions primaires (26) sont au moins au nombre de deux.

9. Procédé selon l'une quelconque des revendications précédentes dans lequel l'étape de compacter l'empilement (2) met en oeuvre un compactage isostatique à chaud.

10. Empilement (2) comprenant :
- une tôle d'extrados (4),
- un noyau (14),
- une tôle d'intrados (6), et
- des pions primaires (26) logés dans des alésages primaires (20) du noyau **caractérisé en ce que** lesdits pions comprennent un matériau autre qu'un alliage à base de titane et forment au moins un polygone (15), et comprenant en outre
- un pion secondaire (28) en alliage à base de titane logé dans un alésage secondaire (24) du noyau.

11. Empilement selon la revendication précédente dans lequel au moins l'un des pions primaires et secondaire (26, 28) comprend une tige (40) présentant un axe longitudinal et une tête (42) s'étendant en saillie de la tige suivant une direction radiale à l'axe.

## Patentansprüche

1. Verfahren zur Herstellung einer Turbomaschinenschaufel, wobei das Verfahren den folgenden Schritt umfasst:
- Installieren von Primärstiften (26) in Primärbohrungen (20) eines Kerns,
**dadurch gekennzeichnet, dass**:
- die Primärstifte (26) ein anderes Material als eine Legierung auf Titanbasis umfassen, und
- die Primärbohrungen mindestens ein Polygon (15) bilden,
wobei das Verfahren die folgenden Schritte umfasst:
- Installieren eines Sekundärstifts (28) aus Legierung auf Titanbasis in einer Sekundärbohrung (24) des Kerns,
- Herstellen eines Stapels (2) aus einem Oberseitenblech (4), dem Kern (14) und einem Unterseitenblech (6),
- Verdichten des Stapels,
- Entfernen der Primärstifte (26) aus den Primärbohrungen (20),
- Entfernen des Sekundärstifts (28) aus der Sekundärbohrung (24), und
- Herausziehen des Kerns (14) aus dem Stapel.

2. Verfahren nach vorhergehendem Anspruch, wobei mindestens einer der Primär- und Sekundärstifte (26, 28) einen Schaft (40) mit einer Längsachse und einen Kopf (42) umfasst, der sich vom Schaft in einer Richtung radial zur Achse vorstehend erstreckt.

3. Verfahren nach einem der vorhergehenden Ansprüche, das nach dem Schritt des Verdichtens des Stapels die folgenden Schritte in der folgenden Reihenfolge umfasst:
- Fixieren des Stapels in Bezug auf eine Unterlage,
- Durchführen des Schritts des Entfernens der Primärstifte (26), während der Stapel auf der Unterlage fixiert ist,
- Fixieren des Stapels an einem Werkzeug (32) mit Hilfe von Befestigungselementen (34), die durch die Primärbohrungen (20) hindurchgehen, und
- während der Stapel fixiert ist, Durchführen der Schritte des Entfernens des Sekundärstifts (28) und des Herausziehens des Kerns.

4. Verfahren nach einem der vorhergehenden Ansprüche, wobei sich die Sekundärbohrung (24) innerhalb des Polygons (15) erstreckt.

5. Verfahren nach einem der vorhergehenden Ansprüche, wobei der Stapel eine geradlinige Längskante (22) aufweist, wobei sich die Sekundärbohrung (24) und eine erste der Primärbohrungen (20) in einer gleichen Ebene (P) senkrecht zur Längskante erstrecken, wobei sich die Sekundärbohrung (24) zwischen der ersten der Primärbohrungen (20) und der Kante (22) erstreckt.

6. Verfahren nach vorhergehendem Anspruch, wobei die Sekundärbohrung (24) und die erste der Primärbohrungen (20) durch einen Abstand (d) von mindestens 10 mm voneinander getrennt sind.

7. Verfahren nach einem der vorhergehenden Ansprüche, wobei die Primärstifte (26) eine ungerade Anzahl aufweisen.

8. Verfahren nach einem der vorhergehenden Ansprüche, wobei die Primärstifte (26) mindestens zwei sind.

9. Verfahren nach einem der vorhergehenden Ansprüche, wobei der Schritt des Verdichtens des Stapels (2) eine heißisostatische Verdichtung implementiert.

10. Stapel (2), umfassend:
- ein Oberseitenblech (4),
- einen Kern (14),
- ein Unterseitenblech (6), und
- Primärstifte (26), die in Primärbohrungen (20) des Kerns untergebracht sind, **dadurch gekennzeichnet, dass** die Stifte ein anderes Material als eine Legierung auf Titanbasis umfassen und mindestens ein Polygon (15) bilden, und ferner umfassend
- einen Sekundärstift (28) aus einer Legierung auf Titanbasis, der in einer Sekundärbohrung (24) des Kerns untergebracht ist.

11. Stapel nach vorhergehendem Anspruch, wobei mindestens einer der Primär- und Sekundärstifte (26, 28) einen Schaft (40) mit einer Längsachse und einen Kopf (42) umfasst, der sich vom Schaft in einer Richtung radial zur Achse vorstehend erstreckt.

## Claims

1. A method for manufacturing a turbomachine blade, the method comprising the following step:
- installing primary pins (26) in primary bores (20) of a core,
**characterised in that**:
- the primary pins (26) comprise a material other than a titanium based alloy, and
- the primary bores form at least one polygon (15),
the method comprising the following steps:
- installing a secondary pin (28) made of a titanium-based alloy in a secondary bore (24) of the core,
- making a stack (2) of an upper wing skin (4), the core (14) and a lower wing skin (6),
- pressing the stack,
- removing the primary pins (26) from the primary bores (20),
- removing the secondary pin (28) from the secondary bore (24), and
- taking the core (14) out of the stack.

2. The method as claimed in the preceding claim, wherein at least one of the primary and secondary pins (26, 28) comprises a shank (40) having a longitudinal shaft and a head (42) protruding from the shank along a direction radial to the shaft.

3. The method as claimed in any of the preceding claims comprising, after the step of pressing the stack, the following steps in the following order:
- immobilizing the stack with respect to a support,
- carrying out the step of removing the primary pins (26) while the stack is immobilized on the support,
- immobilizing the stack on a tooling (32) by means of attaching members (34) traversing the primary bores (20), and
- while the stack is immobilized, carrying out the steps of removing the secondary pin (28) and taking out the core.

4. The method as claimed in any of the preceding claims wherein the secondary bore (24) extends inside the polygon (15).

5. The method as claimed in any of the preceding claims wherein the stack comprises a straight longitudinal edge (22), the secondary bore (24) and a first of the primary bores (20) extending in one and the same plane (P) perpendicular to the longitudinal edge, the secondary bore (24) extending between the first of the primary bores (20) and the edge (22).

6. The method as claimed in the preceding claim wherein the secondary bore (24) and the first of the primary bores (20) are separated by a distance (d) of at least 10 mm.

7. The method as claimed in any of the preceding claims wherein the primary pins (26) are odd in number.

8. The method as claimed in any of the preceding claims wherein the primary pins (26) are at least two in number.

9. The method as claimed in any of the preceding claims wherein the step of pressing the stack (2) implements Hot Isostatic Pressing.

10. A stack (2) comprising:
- an upper wing skin (4),
- a core (14),
- a lower wing skin (6), and
- primary pins (26) housed in primary bores (20) of the core **characterised in that** said pins comprise a material other than a titanium-based alloy and form at least one polygon (15), and further comprising
- a secondary pin (28) made of a titanium-based alloy housed in a secondary bore (24) of the core.

11. The stack as claimed in the preceding claim wherein at least one of the primary and secondary pins (26, 28) comprises a shank (40) having a longitudinal shaft and a head (42) protruding from the shank along a direction radial to the shaft.
